# EUROPÄISCHE PATENTSCHRIFT

(11) **EP 2 361 196 B1**
(45) Veröffentlichungstag und Bekanntmachung des Hinweises auf die Patenterteilung: **10.10.2012**
(21) Anmeldenummer: 09795321.0
(22) Anmeldetag: 01.12.2009
(51) Int. Cl.: B64G 1/40

(54) **BEHÄLTER ZUM AUFNEHMEN, SPEICHERN UND ABGEBEN VON FLÜSSIGKEITEN UND/ODER VISKOSEN STOFFEN, INSBESONDERE VON KRAFTSTOFF ODER TREIBSTOFF ODER TRINKWASSER, UND DESSEN VERWENDUNG**
TANK FOR RECEIVING, STORING AND DISCHARGING LIQUIDS AND/OR VISCOUS SUBSTANCES, IN PARTICULAR FUEL OR PROPELLANT OR DRINKING WATER, AND USE THEREOF
RÉCIPIENT DE RÉCEPTION, STOCKAGE ET DISTRIBUTION DE LIQUIDES ET/OU DE SUBSTANCES VISQUEUSES, NOTAMMENT DE CARBURANT OU DE COMBUSTIBLE OU D'EAU POTABLE, ET SON UTILISATION

(30) Priorität: 01.12.2008 DE 102008059880
(43) Veröffentlichungstag der Anmeldung: 31.08.2011
(73) Patentinhaber: MT Aerospace AG, 86153 Augsburg (DE)
(72) Erfinder: SACHER, Hanno, 86199 Augsburg (DE); SPIEGEL, Michael, 86462 Langweid/Lech (DE)
(74) Vertreter: Grape & Schwarzensteiner
(86) Internationale Anmeldenummer: PCT/EP2009/008556
(87) Internationale Veröffentlichungsnummer: WO 2010/063449

(56) Entgegenhaltungen:
- EP-A2- 0 250 084
- US-A- 4 733 531

## Beschreibung

Die vorliegende Erfindung betrifft einen Behälter zum Aufnehmen, Speichern und Abgeben von Flüssigkeiten und/oder viskosen Stoffen, insbesondere von Kraftstoff oder Treibstoff oder Trinkwasser, und dessen Verwendung.

Für die Lageregelung von Raumfahrzeugen, wie beispielsweise Satelliten, werden (Klein)Triebwerke eingesetzt, die mit Treibstoff versorgt werden müssen. Das wesentliche Problem der Versorgung mit Treibstoff besteht in der geringen Gravitation, in einem Mikrogravitationszustand und in der Schwerelosigkeit, welcher/welchem das Raumfahrzeug bzw. der Satellit auf seiner Umlaufbahn ausgesetzt ist. Aufgrund dessen verteilt sich der Treibstoff in dem Behälter oder weg von der Auslassöffnung relativ ungeordnet. Um den Treibstoff gezielt aus dem Behälter zu fördern, findet der Kapillareffekt, der im Zusammenhang mit der Oberflächenspannung von Flüssigkeiten und viskosen Fluiden steht, Verwendung. Der Kapillareffekt ermöglicht ein gezieltes Sammeln und Weiterleiten des Treibstoffes in jeder räumlichen Lage des Raumfahrzeuges bzw. Satelliten. Um den Kapillareffekt nutzen zu können, ist es notwendig den Behälter mit sogenannten Leitblechen oder dergleichen auszurüsten.

Derartige Behälter sind allgemein bekannt. So ist beispielsweise in der US-PS 4,733,531 ein Behälter als Tank für ein Raumfahrzeug beschrieben. Der Behälter ist zum Aufnehmen, Speichern und Abgeben von Flüssigkeiten und viskosen Stoffen, insbesondere von Kraftstoff oder Treibstoff, vorgesehen. Der Behälter umfasst einen Mantel und wenigstens ein Leitblech. Das Leitblech ist in einem Innenraum des Behälters an der Innenseite des Mantels und mit einem Ende einer Auslassöffnung des Behälters zugewandt angeordnet. Weiterhin erstreckt sich das wenigstens eine Leitblech in einen zu der Auslassöffnung des Behälters benachbarten oder angrenzenden Bereich hinein. Allerdings hat sich dieser Behälter aufgrund seiner konstruktiven Ausgestaltung insgesamt als verhältnismäßig nachteilig erwiesen. Zum einen hat sich in der Praxis herausgestellt, dass sich der Abstand zwischen den Leitblechen und der Innenseite des Mantels des Behälters infolge einer enormen Druckbeaufschlagung des Behälters im Betrieb erheblich vergrößert. Dies wiederum hat zur Folge, dass der Kapillareffekt im Zusammenhang mit der Oberflächenspannung von Flüssigkeiten und viskosen Fluiden und der Fluss der Flüssigkeiten und viskosen Fluiden unterbrochen wird. Damit einhergehend kann der Treibstofffluss abreißen. Die Treibstoffversorgung insgesamt wird zeitweise oder ständig unterbrochen, was zur Unterversorgung und Nicht-Versorgung der Triebwerke mit Treibstoff und letztendlich zur Unkontrollierbarkeit des Raumfahrzeuges bzw. des Satelliten führt. Zum anderen ist die Einhaltung des Abstandes der Leitbleche zur Innenseite des Mantels des Behälters bereits aufgrund des Fertigungsprozesses an sich sehr schwierig. Der Behälter wird im letzten Fertigungsschritt verschweißt und ist danach nicht mehr zugänglich. Nachdem der Behälter hergestellt wurde, kann also nicht mehr geprüft werden, ob die Leitbleche korrekt angeordnet sind. Aber selbst wenn von außen noch eine Prüfung durchführbar wäre, könnte eine Korrektur des Abstandes der Leitbleche zu der Innenseite des Mantels nicht mehr vorgenommen werden.

Der vorliegenden Erfindung liegt daher die Aufgabe zugrunde, einen Behälter zum Aufnehmen, Speichern und Abgeben von Flüssigkeiten und/oder viskosen Stoffen, insbesondere von Kraftstoff oder Treibstoff oder Trinkwasser, zur Verfügung zu stellen, mit welchem sich die obigen Nachteile verhindern lassen, welcher mithin konstruktiv besonders einfach, zugleich kompakt und stabil sowie sehr leichtbauend ist und eine ausgesprochen zuverlässige wie gleichermaßen kontinuierliche Förderung und Abgabe der in dem Behälter aufgenommenen und gespeicherten Flüssigkeiten und viskosen Stoffe, insbesondere des Kraftstoffes oder Treibstoffes oder Trinkwassers, sicherstellt und in der Herstellung ausgesprochen kostengünstig ist, und dessen Verwendung bereitzustellen.

Diese Aufgabe wird in vorrichtungstechnischer Hinsicht auf überraschend einfache Weise durch die Merkmale des Anspruchs 1 gelöst.

Durch die Ausgestaltung des erfindungsgemäßen Behälters zum Aufnehmen, Speichern und Abgeben von Flüssigkeiten und/oder viskosen Stoffen, insbesondere von Kraftstoff oder Treibstoff oder Trinkwasser, mit einem Mantel und wenigstens einem Leitblech, das in einem Innenraum des Behälters an der Innenseite des Mantels und mit einem Ende einer Auslassöffnung des Behälters zugewandt angeordnet ist und sich in einen zu der Auslassöffnung des Behälters benachbarten oder angrenzenden Bereich hineinerstreckt, wobei ein flexibles Element zwischen dem wenigstens einen Leitblech und der Innenseite des Mantels zur Abdeckung oder Überdeckung eines/einer zwischen dem wenigstens einen Leitblech und der Innenseite des Mantels ausgebildeten Spalts, Ecke, Zwickels oder Zwischenraums angeordnet ist, wird eine besonders einfache, zudem kompakte und stabile Bauweise des Behälters von verhältnismäßig geringem Gewicht erreicht. Darüber hinaus ist eine ausgesprochen zuverlässige wie gleichermaßen kontinuierliche Förderung und Abgabe der in dem Behälter aufgenommenen und gespeicherten Flüssigkeiten und viskosen Stoffe, insbesondere des Kraftstoffes oder Treibstoffes oder Trinkwassers, sicherstellt. So wird der Kapillareffekt im Zusammenhang mit der Oberflächenspannung von Flüssigkeiten und viskosen Fluiden und der Fluss der Flüssigkeiten und viskosen Fluiden ohne jede Unterbrechung aufrechterhalten. Damit einhergehend ist ein Abriss des Flusses bzw. der Versorgung, d.h. der Förderung und Abgabe, mit Flüssigkeiten und viskosen Fluiden, insbesondere mit Kraftstoff oder Treibstoff oder Trinkwasser, einfach und gleichermaßen zuverlässig ausgeschlossen. Somit wird insbesondere eine Treibstoffversorgung wender zeitweise noch vollständig unterbrochen. Eine Unterversorgung und Nicht-Versorgung der Triebwerke mit Treibstoff und letztendlich eine Unkontrollierbarkeit des Raumfahrzeuges bzw. des Satelliten werden vermieden. Schließlich gestaltet sich die Herstellung des erfindungsgemäßen Behälters einfach und wenig arbeitsintensiv und ist somit ausgesprochen kostengünstig. Zum einen ist der Abstand des wenigstens einen Leitbleches zur Innenseite des Mantels des Behälters aufgrund des flexiblen Elementes nicht weiter relevant. Zum anderen entfällt nicht zuletzt hieraus resultierend jegliches Überprüfungs- und/oder Nachbesserungserfordernis.

Weitere vorteilhafte Einzelheiten des erfindungsgemäßen Behälters sind in den Ansprüchen 2 bis 14 beschrieben.

Von großer Bedeutung für eine ausgesprochen einfache und damit kostengünstige Bauweise zum einen und eine hohe Funktionszuverlässigkeit aufgrund einer mechanischen Festigkeit und einer geringen Spannungsbelastung des erfindungsgemäßen Behälters zum anderen sind die Merkmale des Anspruchs 2. Danach ist das flexible Element an dem wenigstens einen Leitblech unlösbar befestigt. In alternativer Ausgestaltung ist es denkbar, das flexible Element in kinematischer Umkehr unlösbar an der Innenseite des Mantels zu befestigen. In diesem Zusammenhang ist das flexible Element vorteilhafterweise an dem wenigstens einen Leitblech oder an der Innenseite des Mantels durch Schwei-βen, Löten, Nieten oder Kleben befestigt. In ganz vorteilhafter Weise ist das flexible Element an dem wenigstens einen Leitblech oder an der Innenseite des Mantels durch Löten befestigt.

Bevorzugt kommt das flexible Element mit dessen freiliegendem Bereich nach Anspruch 3 wenigstens teilweise und/oder flächig an der Innenseite des Mantels oder an dem wenigstens einen Leitblech zur Anlage oder Auflage.

Des Weiteren ist erfindungsgemäß vorgesehen, dass das flexible Element nach Anspruch 4 mit dessen freiliegendem Bereich unter Vorspannung an der Innenseite des Mantels oder an dem wenigstens einen Leitblech zur Anlage oder Auflage kommt. Vorzugsweise liegt es im Rahmen der Erfindung, dass der freiliegende Bereich des flexiblen Elementes mit einer definierten Biegespannung, die der durch Anlage oder Auflage an der Innenseite des Mantels oder an dem wenigstens einen Leitblech erzeugten Biegspannung entgegengesetzt ist, versehen ist.

Besonders vorteilhaft sind die Merkmale des Anspruchs 5, wonach das flexible Element in dessen freiliegendem Bereich mit einem die Biegesteifigkeit erhöhenden Element ausgebildet ist.

Zur Vereinfachung der Bauweise ist der freiliegende Bereich des flexiblen Elementes dabei nach Anspruch 6 mit einem die Biegesteifigkeit erhöhenden, einstückig mit dem flexiblen Element ausgebildeten Element versehen.

In diesem Zusammenhang ist der freiliegende Bereich des flexiblen Elementes nach Anspruch 7 vorzugsweise mit einer die Biegesteifigkeit erhöhenden, randseitig oder kantenseitig vorgesehenen Abkantung mit Radius, Bördelung oder Profilierung versehen.

In dazu alternativer oder kumulativer Ausgestaltung der Erfindung kann der freiliegende Bereich des flexiblen Elementes nach Anspruch 8 ebenso mit einem die Biegesteifigkeit erhöhenden, zu dem flexiblen Element gesondert ausgebildeten Element versehen sein.

Dabei kann der freiliegende Bereich des flexiblen Elementes zweckmäßigerweise nach Anspruch 9 mit einem die Biegesteifigkeit erhöhenden, randseitig oder kantenseitig vorgesehenen Versteifungs- oder Verstärkungselement, insbesondere einem Draht oder dergleichen, versehen ist.

Von ganz besonders großem Interesse sind weiterhin die konstruktiven Maßnahmen des Anspruchs 10, wonach das flexible Element als Folie ausgebildet ist. Insbesondere liegt es im Rahmen der Erfindung, dass das flexible Element eine Dicke von etwa 0,1 um bis etwa 500 µm, insbesondere von etwa 10 µm bis etwa 50 µm, vorzugsweise von etwa 20 µm bis etwa 30 µm, und ganz bevorzugt von etwa 25 µm, aufweist.

Von besonderem Vorteil sind die Merkmale des Anspruchs 11, dass nämlich der freiliegende Bereich des flexiblen Elementes eine Länge, die im Wesentlichen dem etwa Zweifachen bis Sechsfachen, insbesondere Dreifachen, des Spalts, Ecke, Zwickels oder dergleichen Zwischenraums zwischen dem wenigstens einen Leitblech und der Innenseite des Mantels entspricht, aufweist. Dabei weist der freiliegende Bereich des flexiblen Elementes in diesem Zusammenhang vorzugsweise eine Länge von etwa 0,1 mm bis etwa 200 mm, insbesondere von etwa 0,1 mm bis etwa 50 mm, vorzugsweise von etwa 5 mm bis etwa 20 mm, und ganz bevorzugt von etwa 10 mm, auf.

Des Weiteren ist erfindungsgemäß vorgesehen, dass der Behälter nach Anspruch 12 mit einer im Bereich der Auslassöffnung angeordneten und der Auslassöffnung vorgeordneten Einrichtung zum Sammeln und dosierten Abgeben der Flüssigkeiten und viskosen Stoffe, insbesondere des Kraftstoffes oder Treibstoffes oder Trinkwassers, oder dergleichen Propellant Management Device (PMD) versehen ist.

Darüber hinaus liegt es im Rahmen der Erfindung, dass der Behälter entsprechend den Merkmalen des Anspruchs 13 leichtbauend ausgebildet ist.

Zweckmäßigerweise ist/sind der Behälter, insbesondere der Mantel des Behälters, und/oder das wenigstens eine Leitblech und/oder das flexible Element und/oder das Versteifungs- oder Verstärkungselement, dabei aus Metall, insbesondere aus Stahl, Edelstahl, Aluminium, Titan, einer Legierung daraus und/oder einer Kombination daraus gebildet. Materialien, wie vorzugsweise Edelstahl oder insbesondere Titan oder eine Legierung daraus, werden einerseits der Forderung nach Minimierung des Gewichtes des Behälters und andererseits der Forderung nach zum Beispiel Säure- und Korrosionsbeständigkeit gegenüber Kraft- und Treibstoff oder Trinkwassertauglichkeit gleicherma-βen gerecht.

In diesem Zusammenhang ist es von besonderem Vorteil, den Behälter, insbesondere den Mantel des Behälters, entsprechend den Merkmalen des Anspruchs 14 mit einem Überzug aus Kunststoff, insbesondere faserverstärktem Kunststoff, und/oder Faserverbundwerkstoff zu versehen. Hierdurch lassen sich die Steifigkeit und Festigkeit des Behälters nach der Erfindung erhöhen.

Alternativ dazu kann der Behälter, insbesondere der Mantel des Behälters, entsprechend den Maßnahmen des Anspruchs 14 in bevorzugter Weise vollständig oder auch nur teilweise aus Kunststoff, insbesondere faserverstärktem Kunststoff, und/oder Faserverbundwerkstoff gebildet sein. Für einen Behälter nach der Erfindung bieten sich beispielsweise hinsichtlich einer Gewichtsoptimierung Faserverbundwerkstoffe an, die nach sämtlichen gängigen Fertigungsverfahren, wie Handlaminat, Prepreg, Harz-Infusion, Harz-Injektion inklusive geklebter bzw. gebolzter Fügungen etc., verarbeitet werden können.

Schließlich liegt es noch im Rahmen der Erfindung, den erfindungsgemäßen Behälter zum Aufnehmen, Speichern und Abgeben von Flüssigkeiten und viskosen Stoffen, insbesondere von Kraftstoff oder Treibstoff oder Trinkwasser, nach Anspruch 15 in Fahrzeugen, insbesondere in Luftfahrzeugen oder Fluggeräten der Luft- und Raumfahrt, vorzugsweise in Flugzeugen und Raumflugkörpern, insbesondere in Wasserfahrzeugen, vorzugsweise in einem U-Boot oder Luftkissenfahrzeug (Hovercraft), oder insbesondere in Landfahrzeugen, vorzugsweise in einem Personenkraftwagen, Lastkraftwagen oder Wohnmobil, zu verwenden. Ganz besonders eignet sich der erfindungsgemäße Behälter zum Aufnehmen, Speichern und Abgeben von Flüssigkeiten und viskosen Stoffen, insbesondere von Kraftstoff oder Treibstoff, für Raketen-Treibstofftanks oder Satellitentanks.

Weitere Merkmale, Vorteile und Einzelheiten der Erfindung ergeben sich aus der nachfolgenden Beschreibung von einigen bevorzugten Ausführungsformen der Erfindung sowie anhand der Zeichnungen. Hierbei zeigen:
- Fig. 1: eine teilweise abgebrochene Querschnittansicht durch eine Ausführungsform eines erfindungsgemäß ausgebildeten Behälters,
- Fig. 2: eine teilweise abgebrochene Querschnittansicht durch die Ausführungsform des erfindungsgemäß ausgebildeten Behälters entsprechend der Linie 11-11 in der Fig. 1, in vergrößerter Darstellung, und
- Fig. 3: eine schematische, teilweise abgebrochene Querschnittansicht durch eine weitere Ausführungsform eines erfindungsgemäß ausgebildeten Behälters entsprechend der Fig. 2, in verkleinerter Darstellung.

Bei der nachfolgenden Beschreibung einer Ausführungsform eines erfindungsgemäßen Behälters 10 zum Aufnehmen, Speichern und Abgeben von Flüssigkeiten und/oder viskosen Stoffen, insbesondere von Kraftstoff oder Treibstoff oder Trinkwasser, sind einander entsprechende, gleiche Bauteile jeweils mit identischen Bezugsziffern versehen.

Der erfindungsgemäße Behälter 10 zum Aufnehmen, Speichern und Abgeben von Flüssigkeiten und/oder viskosen Stoffen, insbesondere von Kraftstoff oder Treibstoff und Trinkwasser, findet in vorteilhafter Weise in Fahrzeugen, insbesondere in Luftfahrzeugen oder Fluggeräten der Luft- und Raumfahrt, vorzugsweise in Flugzeugen und Raumflugkörpern, insbesondere in Wasserfahrzeugen, vorzugsweise in einem U-Boot oder Luftkissenfahrzeug (Hovercraft), der insbesondere in Landfahrzeugen, vorzugsweise in einem Personenkraftwagen, Lastkraftwagen oder Wohnmobil, Verwendung.

Darüber hinaus lässt sich der erfindungsgemäße Behälter 10 zum Aufnehmen, Speichern und Abgeben von Flüssigkeiten und viskosen Stoffen, insbesondere von Kraftstoff oder Treibstoff, in besonders vorteilhafter Weise in Raumfahrzeugen, vorzugsweise Satelliten und Raumfähren oder dergleichen Fluggeräten der Raumfahrt, einsetzen. Beispielsweise eignet sich der erfindungsgemäße Behälter 10 zur Verwendung als Raketen-Treibstofftank oder Satellitentank bzw. Treibstofftank zur Versorgung von (Klein)Triebwerken eines Satelliten unter geringer Gravitation, in einem Mikrogravitationszustand und unter Schwerelosigkeit zu dessen Lageregelung auf der Umlaufbahn um die Erde etc.

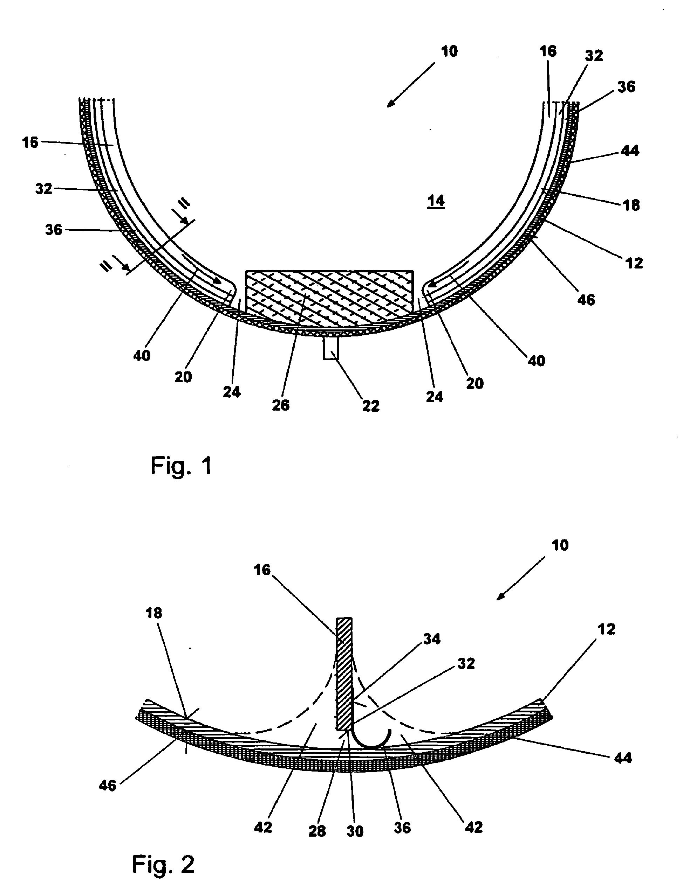

Der in den Fig. 1 und 2 schematisch dargestellte Behälter 10 nach der Erfindung umfasst einen, insbesondere dünnwandigen, Mantel 12, in dessen Innenraum 14 zum Beispiel kryogene Fluide, wie Sauerstoff und Wasserstoff oder auch Monomethyl-Hydrazin sowie verschiedene Mixturen aus Nitrogen-Oxiden, aufgenommen und gespeichert sind, welche unter anderem als Treibstoff für einen Raketen- oder Satellitenantrieb bzw. sonstige Antriebsaggregate etwa zu deren Lageregelung dienen.

Darüber hinaus weist der Behälter 10 wenigstens ein Leitblech 16 auf. Das wenigstens eine Leitblech 16 ist in dem Innenraum 14 des Behälters 10 an der Innenseite 18 des Mantels 12 angeordnet. Des Weiteren ist das wenigstens eine Leitblech 16 mit einem Ende 20 einer Auslassöffnung 22 des Behälters 10 zugewandt angeordnet.

Wie aus der Fig. 1 hervorgeht, erstreckt sich das wenigstens eine Leitblech 16 weiterhin mit dem einen Ende 20 in einen Bereich 24 hinein, der zu der Auslassöffnung 22 des Behälters 10 benachbart ist und/oder an diesen (vorzugsweise unmittelbar) angrenzt.

Wie in der Fig. 1 schematisch angedeutet ist, ist eine Einrichtung 26 bzw. ein wiederbefüllbares Reservoir oder dergleichen Behälter zum Sammeln und dosierten Abgeben der Flüssigkeiten und viskosen Stoffe, insbesondere des Kraftstoffes oder Treibstoffes oder Trinkwassers, in dem Bereich 24 der Auslassöffnung 22 angeordnet. Eine solche Einrichtung 26 ist auf dem einschlägigen Fachgebiet auch als sogenannte Propellant Management Device (PMD) bekannt.

Der Bereich 24 und damit die Einrichtung 26 sind der Auslassöffnung 22 dabei (unmittelbar) vorgeordnet. Die Einrichtung 26 kann auf diese Weise den Treibstoff sammeln, fördern und der Auslassöffnung dosiert bzw. kontrolliert und zuleiten. Die Einrichtung 26 besitzt beispielsweise ein Speichervolumen von ca. 4 Liter und kann mittels erfindungsgemäßer Ausbildung in ca. 1,5 Stunden gefüllt werden. Durch weitere konstruktive Maßnahmen, wie Siebe, Bleche etc., kann zusätzlich das Entstehen von Luftblasen verhindert werden. Der Treibstoff gelangt mithin luftblasenfrei aus dem Bereich 24 der Auslassöffnung, über die Einrichtung 26 und die Auslassöffnung 22 in die Triebwerke.

Der Behälter 10 kann in Abhängigkeit von dessen Form und Größe mit einer beliebigen Anzahl solcher Leitbleche 16 ausgestattet sein. Bei der Ausführungsform des erfindungsgemäßen Behälters 10 sind entsprechend der Fig. 1 beispielhaft lediglich zwei solcher Leitbleche 16 gezeigt.

Ohne im Einzelnen dargestellt zu sein, ist das wenigstens eine Leitblech 16 über nicht näher dargestellte Befestigungseinrichtungen, wie Bolzen oder dergleichen Abstandeselemente bzw. Abstandeshalter, an der Innenseite 18 des Mantels 12 in an sich bekannter Weise angebracht. Abstand und Winkel können bei der Anbringung des wenigstens einen Leitbleches 16 zu der Innenseite 18 des Mantels 12 variieren. Dabei entsteht in aller Regel ein Spalt, eine Ecke, ein Zwickel oder dergleichen Zwischenraum 28 zwischen dem wenigstens einen Leitblech 16, d.h. dessen der Innenseite 18 zugewandten Stirnfläche 30 bzw. Unterseite, und der Innenseite 18 des Mantels 12. Durch Druckänderungen im Betrieb des Behälters 10 kann sich der Spalt, die Ecke, der Zwickel oder dergleichen Zwischenraum 28 infolge der Verformung unter Druck noch zusätzlich erheblich, zum Beispiel um mehrere Millimeter, vergrößern. So wird der Treibstoff durch Zugabe von Helium als Druckgas mit einem Betriebsdruck von 0,2 bis etwa 24,5 bar aus dem Behälter 10 gepresst. Dies wiederum kann dazu führen, dass der Kapillareffekt im Zusammenhang mit der Oberflächenspannung von Flüssigkeiten und viskosen Fluiden und der Fluss der Flüssigkeiten und viskosen Fluiden sowie damit einhergehend die Treibstoffversorgung insgesamt unterbrochen wird.

Zur Vermeidung dessen ist ein flexibles Element 32 vorgesehen, das bevorzugt dünn ausgebildet und zwischen dem wenigstens einen Leitblech 16 und der Innenseite 18 des Mantels 12 angeordnet ist. Das flexible Element 32 dient einer Abdeckung oder Überdeckung bzw. Überbrückung des/der zwischen dem wenigstens einen Leitblech 16 und der Innenseite 18 des Mantels 18 ausgebildeten Spalts, Ecke, Zwickels oder dergleichen Zwischenraums 28 und einem Ausgleich von Veränderungen, insbesondere von ungewollten Vergrößerungen, dessen.

Das flexible Element 32 ist an dem wenigstens einen Leitblech 16 oder an der Innenseite 18 des Mantels 12 unlösbar befestigt. Nachdem der Mantel 12 des Behälters 10 in aller Regel ausgesprochen dünn ausgebildet ist, bietet sich zur Vermeidung ungewollter Spannungsverhältnisse bevorzugt eine Anbringung des flexiblen Elementes 32 an dem wenigstens einen Leitblech 16 an. Entsprechend der Fig. 2 ist das flexible Element 32 an einer Seitenfläche 34 des wenigstens einen Leitbleches 16 benachbart zu dessen Stirnfläche 30 angebracht.

Eine kinematische Umkehr, d.h. eine Anbringung des flexiblen Elementes 32 an der Innenseite 18 des Mantels 12, ist jedoch, ohne im Einzelnen dargestellt zu sein, gleichermaßen möglich.

Dabei kann eine Befestigung mittels Fügen, wie Schweißen, Löten, Nieten oder Kleben, erfolgen. Als besonders vorteilhaft, da ausgesprochen material- und werkstoffschonend sowie dauerhaft, hat sich in der Praxis vor allem das Löten bzw. Anlöten des flexiblen Elementes 32 an dem wenigstens einen Leitblech 16 oder an der Innenseite 18 des Mantels 12 erwiesen.

Das flexible Element 32 kommt mit dessen freiliegendem Bereich 36 wenigstens teilweise und/oder flächig an der Innenseite 18 des Mantels 12, wie der Fig. 2 deutlich entnehmbar ist, oder an dem wenigstens einen Leitblech 16 (nicht gezeigt) zur Anlage oder Auflage.

Des Weiteren kann das flexible Element 32 mit dessen freiliegendem Bereich 36 unter Vorspannung an der Innenseite 18 des Mantels 12 oder an dem Leitblech 16 zur Anlage oder Auflage kommen. In diesem Fall ist der freiliegende Bereich 36 des flexiblen Elementes 32 mit einer definierten Biegespannung versehen, die der durch Anlage oder Auflage an der Innenseite 18 des Mantels 12 oder an dem Leitblech 16 erzeugten Biegspannung entgegengesetzt ist.

Darüber hinaus kann das flexible Element 32 in dessen freiliegendem Bereich 36 alternativ oder kumulativ mit einem die Biegesteifigkeit erhöhenden Element 38 ausgebildet sein.

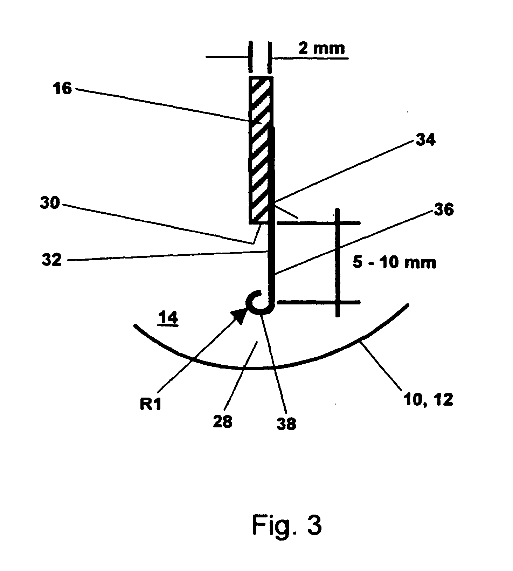

Bei der weiteren Ausführungsform des erfindungsgemäßen Behälters 10, die sich der Fig. 3 entnehmen lässt, ist ein solches die Biegesteifigkeit erhöhendes Element 38 verwirklicht. Das Element 38 ist einstückig mit dem flexiblen Element 32 selbst ausgebildet. Demnach ist der freiliegende Bereich 36 des flexiblen Elementes 32 mit dem die Biegesteifigkeit erhöhenden Element 38 in Form einer randseitig oder kantenseitig vorgesehenen Bördelung, Abkantung mit Radius oder Profilierung versehen. Die randseitige oder kantenseitige Bördelung bzw. Abkantung weist beispielsweise einen Radius R1 von 1 bis 2 mm auf.

In alternativer Ausgestaltung dazu kann der freiliegende Bereich 36 des flexiblen Elementes 32, ohne im Einzelnen dargestellt zu sein, mit einem die Biegesteifigkeit erhöhenden Element 38 versehen sein, das zu dem flexiblen Element 32 gesondert ausgebildet ist. Dies kann sich beispielsweise durch ein randseitig oder kantenseitig vorgesehenes Versteifungs- oder Verstärkungselement, etwa in Form eines Drahtes oder dergleichen, realisieren lassen. Das Versteifungs- oder Verstärkungselement wird an das flexible Element 32 mittels einer der zuvor erwähnten Fügetechniken befestigt.

In besonders vorteilhafter Weise ist das flexible Element 32 als Folie ausgebildet. Durch den aggressiven Treibstoff, der in Satelliten zum Einsatz kommt (Monomethyl-Hydrazin und verschiedene Mixturen aus Nitrogen-Oxiden), besteht das flexible Element 32 in Form einer Folie bevorzugt aus Titan oder einer Legierung daraus.

Dabei weist das flexible Element 32 eine Dicke von etwa 0,1 µm bis etwa 500 µm, insbesondere von etwa 10 µm bis etwa 50 µm, vorzugsweise von etwa 20 µm bis etwa 30 µm, und ganz bevorzugt von etwa 25 µm, auf. Der freiliegende Bereich 36 des flexiblen Elementes 32 besitzt eine Länge, die im Wesentlichen dem etwa Zweifachen bis Sechsfachen, insbesondere Dreifachen, des Spalts, Ecke, Zwickels oder dergleichen Zwischenraums 28 zwischen dem Leitblech 16 und der Innenseite 18 des Mantels 12 entspricht. Beispielhaft kann das flexible Element eine Länge von etwa 0,1 mm bis etwa 200 mm, insbesondere von etwa 0,1 mm bis etwa 50 mm, vorzugsweise von etwa 5 mm bis etwa 20 mm, und ganz bevorzugt von etwa 10 mm, aufweisen.

Durch die konstruktive Ausgestaltung des erfindungsgemäßen Behälters 10 werden die ungeordnet im Innenraum 14 verteilten Flüssigkeiten und viskosen Stoffe, insbesondere der Kraftstoff oder Treibstoff, über das/die Leitblech/e 16 gesammelt bzw. an dem/den Leitbleche/n mittels Kapillareffektes, der im Zusammenhang mit der Oberflächenspannung der Flüssigkeiten und viskosen Stoffe entsteht, angelagert. Die Anlagerung erfolgt, wie in der Fig. 2 gezeigt, seitlich rechts und links des Leitbleches/der Leitbleche 16 und des/der flexiblen Elemente 32 in einer Flüssigkeits- bzw. Fluidansammlung 42. Die gesammelten bzw. angelagerten Flüssigkeiten und viskosen Stoffe fließen sodann entlang des/der Leitbleche/s 16 und/oder des flexiblen Elementes 32 in Richtung des Pfeiles 40 zu dessen Ende/n 20 zu dem bzw. in den Bereich 24. Der Bereich 24 entspricht somit einem Bereich, in welchem sich die Flüssigkeiten und viskosen Stoffe ansammeln, bevor diese über die Einrichtung 26 und die Auslassöffnung 22 an die Triebwerke weiterbefördert werden.

Der Behälter 10, der in den Fig. 1 und 2 dargestellt ist, ist leichtbauend ausgebildet. Der Behälter 10 und insbesondere dessen Mantel 12 ist zu diesem Zweck aus Metall, insbesondere aus Stahl, Edelstahl, Aluminium, Titan, einer Legierung daraus und/oder einer Kombination daraus gebildet und zur Druckversteifung vorzugsweise mit einem Überzug 44 aus Kunststoff, insbesondere faserverstärktem Kunststoff, und/oder Faserverbundwerkstoff versehen. Der Überzug 44 ist bei der dargestellten Ausführungsform des erfindungsgemäßen Behälters 10 auf der Außenseite 46 des Mantels 12 aufgebracht.

Alternativ dazu können der Behälter 10 und insbesondere dessen Mantel 12 auch ohne Überzug 44 oder ebenso vollständig aus Kunststoff, insbesondere faserverstärktem Kunststoff, und/oder Faserverbundwerkstoff gebildet sein.

Bei einem Ausführungsbeispiel des erfindungsgemäßen Behälters 10, welcher sich in der Praxis besonders vorteilhaft erwiesen hat, weist das wenigstens eine Leitblech 16 einen rechteckigen Querschnitt mit einer Höhe von 15 mm und einer Breite von 2 mm auf. Das flexible Element 30 ist an das wenigstens eine Leitblech 16 angelötet und ist als Folie aus Titan ausgebildet. Dessen Dicke beträgt ca. 25 µm. Der freiliegende Bereich 36, gerechnet von der Stirnfläche 30 des Leitbleches 16, weist eine Länge von ungefähr 5 bis 10 mm auf.

Die vorliegende Erfindung ist nicht auf die dargestellte Ausführungsformen des Behälters 10 beschränkt. So ist es ohne weiteres denkbar, die vorgestellten, zum Teil voneinander sehr unterschiedlichen Ausführungsformen des erfindungsgemäßen Behälters 10 und dessen einzelnen Bauteile, insbesondere die Leitbleche 16 und flexiblen Elemente 32, miteinander individuell und beliebig zu kombinieren. Darüber hinaus ist es möglich, die Leitbleche 16 und die flexiblen Elemente 32, in beliebiger Anzahl, Anordnung, Form und Abmessung vorzusehen, um eine möglichst vollständige und damit rückstandslose Abgabe der in dem Behälter 10 aufgenommenen und gespeicherten Flüssigkeiten und viskosen Stoffen, insbesondere den Kraftstoff oder Treibstoff, an die Auslassöffnung 22 bzw. die im Bereich 24 der Auslassöffnung 22 angeordneten und der Auslassöffnung 22 vorgeordneten Einrichtung 26 zum Sammeln und dosierten Abgeben der Flüssigkeiten und viskosen Stoffe oder dergleichen Propellant Management Device (PMD) zu ermöglichen.

## Patentansprüche

1. Behälter zum Aufnehmen, Speichern und Abgeben von Flüssigkeiten und/oder viskosen Stoffen, insbesondere von Kraftstoff oder Treibstoff oder Trinkwasser, mit einem Mantel (12) und wenigstens einem Leitblech (16), das in einem Innenraum (14) des Behälters (10) an der Innenseite (18) des Mantels (12) und mit einem Ende (20) einer Auslassöffnung (22) des Behälters (10) zugewandt angeordnet ist und sich in einen zu der Auslassöffnung (22) des Behälters (10) benachbarten oder angrenzenden Bereich (24) hineinerstreckt, **dadurch gekennzeichnet, dass** ein flexibles Element (32) zwischen dem wenigstens einen Leitblech (16) und der Innenseite (18) des Mantels (12) zur Abdeckung oder Überdeckung eines/einer zwischen dem wenigstens einen Leitblech (16) und der Innenseite (18) des Mantels (12) ausgebildeten Spalts, Ecke, Zwickels oder Zwischenraums (28) angeordnet ist.

2. Behälter nach Anspruch 1, **dadurch gekennzeichnet, dass** das flexible Element (32) an dem wenigstens einen Leitblech (16) oder an der Innenseite (18) des Mantels (12) unlösbar, insbesondere durch Schweißen, Löten, Nieten oder Kleben, und ganz bevorzugt durch Löten, befestigt ist.

3. Behälter nach Anspruch 1 oder 2, **dadurch gekennzeichnet, dass** das flexible Element (32) mit dessen freiliegendem Bereich (36) wenigstens teilweise und/oder flächig an der Innenseite (18) des Mantels (12) oder an dem wenigstens einen Leitblech (16) zur Anlage oder Auflage kommt.

4. Behälter nach einem der Ansprüche 1 bis 3, **dadurch gekennzeichnet, dass** das flexible Element (32) mit dessen freiliegendem Bereich (36) unter Vorspannung an der Innenseite (18) des Mantels (12) oder an dem wenigstens einen Leitblech (16) zur Anlage oder Auflage kommt, wobei insbesondere der freiliegende Bereich (36) des flexiblen Elementes (32) mit einer definierten Biegespannung, die der durch Anlage oder Auflage an der Innenseite (18) des Mantels (12) oder an dem wenigstens einen Leitblech (16) erzeugten Biegspannung entgegengesetzt ist, versehen ist.

5. Behälter nach einem der Ansprüche 1 bis 4, **dadurch gekennzeichnet, dass** das flexible Element (32) in dessen freiliegendem Bereich (36) mit einem die Biegesteifigkeit erhöhenden Element (38) ausgebildet ist.

6. Behälter nach einem der Ansprüche 1 bis 5, **dadurch gekennzeichnet, dass** der freiliegende Bereich (36) des flexiblen Elementes (32) mit einem die Biegesteifigkeit erhöhenden, einstückig mit dem flexiblen Element (32) ausgebildeten Element (38) versehen ist.

7. Behälter nach Anspruch 6, **dadurch gekennzeichnet, dass** der freiliegende Bereich (36) des flexiblen Elementes (32) mit einer die Biegesteifigkeit erhöhenden, randseitig oder kantenseitig vorgesehenen Bördelung, Abkantung mit Radius oder Profilierung versehen ist.

8. Behälter nach einem der Ansprüche 1 bis 7, **dadurch gekennzeichnet, dass** der freiliegende Bereich (36) des flexiblen Elementes (32) mit einem die Biegesteifigkeit erhöhenden, zu dem flexiblen Element (32) gesondert ausgebildeten Element versehen ist.

9. Behälter nach Anspruch 8, **dadurch gekennzeichnet,**
**dass** der freiliegende Bereich (36) des flexiblen Elementes (32) mit einem die Biegesteifigkeit erhöhenden, randseitig oder kantenseitig vorgesehenen Versteifungs- oder Verstärkungselement, insbesondere ein Draht oder dergleichen, versehen ist.

10. Behälter nach einem der Ansprüche 1 bis 9, **dadurch gekennzeichnet, dass** das flexible Element (32) als Folie ausgebildet ist, wobei insbesondere das flexible Element (32) eine Dicke von etwa 0,1 µm bis etwa 500 µm, insbesondere von etwa 10 µm bis etwa 50 µm, vorzugsweise von etwa 20 µm bis etwa 30 µm, und ganz bevorzugt von etwa 25 µm, aufweist.

11. Behälter nach einem der Ansprüche 1 bis 10, **dadurch gekennzeichnet, dass** der freiliegende Bereich (36) des flexiblen Elementes (32) eine Länge, die im Wesentlichen dem etwa Zweifachen bis Sechsfachen, insbesondere Dreifachen, des Spalts, Ecke, Zwickels oder Zwischenraums (28) zwischen dem wenigstens einen Leitblech (16) und der Innenseite (18) des Mantels (12) entspricht, aufweist, wobei der freiliegende Bereich (36) des flexiblen Elementes (32) insbesondere eine Länge von etwa 0,1 mm bis etwa 200 mm, insbesondere von etwa 0,1 mm bis etwa 50 mm, vorzugsweise von etwa 5 mm bis etwa 20 mm, und ganz bevorzugt von etwa 10 mm, aufweist.

12. Behälter nach einem der Ansprüche 1 bis 11, **dadurch gekennzeichnet, dass** der Behälter (10) mit einer im Bereich (24) der Auslassöffnung (22) angeordneten und der Auslassöffnung (22) vorgeordneten Einrichtung (26) zum Sammeln und dosierten Abgeben der Flüssigkeiten und viskosen Stoffe, insbesondere des Kraftstoffes oder Treibstoffes oder Trinkwassers, oder dergleichen Propellant Management Device (PMD) versehen ist.

13. Behälter nach einem der Ansprüche 1 bis 12, **dadurch gekennzeichnet, dass** der Behälter (10) leichtbauend ausgebildet ist, wobei vorzugsweise der Behälter (10), insbesondere der Mantel (12) des Behälters (10), und/oder das wenigstens eine Leitblech (16) und/oder das flexible Element (32) und/oder das Versteifungs- oder Verstärkungselement aus Metall, insbesondere aus Stahl, Edelstahl, Aluminium, Titan, einer Legierung daraus und/oder einer Kombination daraus gebildet ist/sind.

14. Behälter nach einem der Ansprüche 1 bis 13, **dadurch gekennzeichnet, dass** der Behälter (10), insbesondere der Mantel (12) des Behälters (10), mit einem Überzug (42) aus Kunststoff, insbesondere faserverstärktem Kunststoff, und/oder Faserverbundwerkstoff versehen oder aus Kunststoff, ganz bevorzugt faserverstärktem Kunststoff, und/oder Faserverbundwerkstoff gebildet ist.

15. Verwendung eines Behälters nach einem der Ansprüche 1 bis 14 zum Aufnehmen, Speichern und Abgeben von Flüssigkeiten und viskosen Stoffen, insbesondere von Kraftstoff oder Treibstoff oder Trinkwasser, in Fahrzeugen, insbesondere in Luftfahrzeugen oder Fluggeräten der Luft- und Raumfahrt, vorzugsweise in Flugzeugen und Raumflugkörpern, insbesondere in Wasserfahrzeugen, vorzugsweise in einem U-Boot oder Luftkissenfahrzeug (Hovercraft), oder insbesondere in Landfahrzeugen, vorzugsweise in einem Personenkraftwagen, Lastkraftwagen oder Wohnmobil, insbesondere zum Aufnehmen, Speichern und Abgeben von Flüssigkeiten und viskosen Stopfen, insbesondere von Kraftstoff oder Treibstoff, für Raketen-Treibstofftanks oder Satellitentanks.

## Claims

1. Container for receiving, storing and discharging liquids and/or viscous substances, in particular fuel or propellant or drinking water, having a casing (12) and at least one baffle plate (16) that is arranged in an internal space (14) of the container (10) at the inner side (18) of the casing (12) and facing one end (20) of a discharge opening (22) of the container (10) and extending into an area (24) of the container (10) in the vicinity of or adjacent to the discharge opening (22), **characterized in that** a flexible element (32) is arranged between the at least one baffle plate (16) and the inner side (18) of the casing (12) for covering or overlapping a gap, edge, knuckle or interspace formed between the at least one baffle plate (16) and the inner side (18) of the casing (12).

2. Container according to claim 1, **characterized in that** the flexible element (32) is fixed un-detachably at the at least one baffle plate (16) or at the inner side (18) of the casing (12), particularly by welding, brazing, riveting or bonding, and mostly preferred by brazing.

3. Container according to claims 1 or 2, **characterized in that** the flexible element (32) with its exposed (36) comes partially or fully into abutment or overlay at the inner side (18) of the casing (12) or the at least one baffle plate (16).

4. Container according to one of the claims 1 to 3, **characterized in that** the flexible element (32) with ist exposed area (36) comes onto abutment or overlay at the inner side (18) of the casing (12) or on the at least one baffle plate (16) under initial load, whereby particularly the exposed area (36) of the flexible element (32) is provided with a defined bending stress, which is contrary to the bending stress produced by abutment or overlay at the inner side (18) of the casing (12) or at the at least one baffle plate (16).

5. Container according to one of claims 1 to 4, **characterized in that** the flexible element (32) in its exposed area (36) is formed with an element (38) increasing the bending stiffness.

6. Container according to one of claims 1 to 5, **characterized in that** the exposed area (36) of the flexible element (32) is provided with an element (38) increasing the bending stiffness and is integrally formed with the flexible element (32).

7. Container according to claim 6, **characterized in that** the exposed area (36) of the flexible element (32) at the border or edge side is provided with a flanging, chamfer with radius or profile increasing the bending stiffness.

8. Container according to one of claims 1 to 7, **characterized in that** the exposed area (36) of the flexible element (32) is provided with an element increasing the bending stiffness and is formed separately to the flexible element (32).

9. Container according to claim 8, **characterized in that** the exposed area (36) of the flexible element (32) at the border or edge side is provided with a stiffening or reinforcing element, particularly a wire or the like, increasing the bending stiffness.

10. Container according to one of claims 1 to 9, **characterized in that** the flexible element (32) is formed as a foil, whereby the flexible element (32) particularly has a thickness of about 0,1 µm to about 500 µm, particularly of about 10 µm to about 50 µm, preferably of about 20 µm to about 30 µm, and most preferred of about 25 µm.

11. Container according to one of claims 1 to 10, **characterized in that** the exposed area (36) of the flexible element (32) has a length essentially corresponding to the twofold or sixfold, particularly the threefold, of the gap, edge, knuckle or interspace (28) between the at least one baffle plate (16) and the inner side (18) of the casing (12), whereby the exposed area (36) of the flexible element (32) particularly has a length particularly of about 0.1 mm to about 200 mm, particularly of about 0.1 mm to about 50 mm, preferably of about 5 mm to about 20 mm and most preferred of about 10 mm.

12. Container according to one of claims 1 to 11, **characterized in that** the container (10) is provided with a means (26) arranged in the area (24) of and before the discharge opening (22) for collecting and dosed discharging of the liquids and viscous substances, particularly the fuel, the propellant or drinking water or the like Propellant Managing Device (PMD).

13. Container according to one of t claims 1 to 12, **characterized in that** the container (10) is formed in lightweight construction, whereby preferably the container (10), particularly the casing (12) of the container (10), and/or the at least one baffle plate (16) and/or the flexible element (32) and/or the stiffening or reinforcing element is/are formed of metal, stainless steel, aluminium, titanium an alloy and/or a combination thereof.

14. Container according to one of the claims 1 to 13, **characterized in that** the container (10), particularly the casing (12) of the container (10), is provided with a coating (42) of plastic, particularly fibre reinforced plastic and/or fibre reinforced composite or is formed of plastic, most preferred of fibre reinforced plastic and/or fibre reinforced composite.

15. Use of a container according one of the claims 1 to 14 for receiving, storing and discharging of fluids and viscous substances, particularly of fuel, propellant or drinking water in vehicles, particularly in aerodynes or aircraft for application in aeronautics, preferably in aeroplanes and space aerodynes, particularly in water vehicles, preferably in a submarine or air cushion craft (Hovercraft), or particularly in land vehicles, preferably in a passenger vehicle, truck or caravan, particularly for receiving, storing and discharging liquids and viscous substances, particularly of fuel or propellant for rocket propellant tanks or satellite tanks.

## Revendications

1. Récipient pour recevoir, stocker et distribuer les liquides et/ou des produits visqueux, en particulier du carburant ou du combustible ou de l'eau potable, comprenant une enveloppe (12) et au moins une tôle de guidage (16) qui est agencée dans un espace intérieur (14) du récipient (10) sur la face intérieure (18) de l'enveloppe (12) en étant tournée par une extrémité (20) vers une ouverture de sortie (22) du récipient (10) et qui s'étend vers l'intérieur d'une région (24) voisine ou adjacente de l'ouverture de sortie (22) du récipient (10), **caractérisé en ce qu'**un élément flexible (32) est agencé entre ladite au moins une tôle de guidage (16) et la face intérieure (18) de l'enveloppe (12) afin de recouvrir ou de coiffer une fente, un coin, un gousset ou un espace intermédiaire (28) formé entre ladite au moins une tôle de guidage (16) et la face intérieure (18) de l'enveloppe (12).

2. Récipient selon la revendication 1, **caractérisé en ce que** l'élément flexible (32) est fixé sur ladite au moins une tôle de guidage (16) ou sur la face intérieure (18) de l'enveloppe (12) de manière indétachable, en particulier par soudage, brasage, rivetage ou collage, et de manière tout à fait préférée par brasage.

3. Récipient selon la revendication 1 ou 2, **caractérisé en ce que** l'élément flexible (32) vient en contact ou en appui, avec sa région libre (36), au moins partiellement et/ou à plat contre la face intérieure (18) de l'enveloppe (12) ou contre ladite au moins une tôle de guidage (16).

4. Récipient selon l'une des revendications 1 à 3, **caractérisé en ce que** l'élément flexible (32) vient en contact ou en appui, avec sa région libre (36), sous précontrainte contre la face intérieure (18) de l'enveloppe (12) ou contre ladite au moins une tôle de guidage (16), et la région libre (36) de l'élément flexible (32) subit une tension de flexion définie, opposée à la tension de flexion engendrée par le contact ou l'appui contre la face intérieure (18) de l'enveloppe (12) ou contre ladite au moins une tôle de guidage (16).

5. Récipient selon l'une des revendications 1 à 4, **caractérisé en ce que** l'élément flexible (32) est réalisé, dans sa région libre (36), avec un élément (38) qui augmente sa rigidité en flexion.

6. Récipient selon l'une des revendications 1 à 5, **caractérisé en ce que** la région libre (36) de l'élément flexible (32) est pourvue d'un élément (38) qui augmente sa rigidité en flexion, réalisé d'un seul tenant avec l'élément flexible (32).

7. Récipient selon la revendication 6, **caractérisé en ce que** la région libre (36) de l'élément flexible (32) est pourvue d'un rabattement, d'un bord tombé présentant un rayon, ou d'un profilage, prévu du côté de la bordure ou du côté d'une arête, qui augmente sa rigidité en flexion.

8. Récipient selon l'une des revendications 1 à 7, **caractérisé en ce que** la région libre (36) de l'élément flexible (32) est pourvue d'un élément qui augmente sa rigidité en flexion, réalisé séparément de l'élément flexible (32).

9. Récipient selon la revendication 8, **caractérisé en ce que** la région libre (36) de l'élément flexible (32) est pourvue d'un élément de rigidification ou de renforcement, qui augmente sa rigidité en flexion, prévu du côté de la bordure ou du côté d'une arête, en particulier un fil ou similaire.

10. Récipient selon l'une des revendications 1 à 9, **caractérisé en ce que** l'élément flexible (32) est réalisé sous forme de film, et l'élément flexible (32) présente en particulier une épaisseur d'environ 0,1 µm à environ 500 µm, en particulier d'environ 10 µm à environ 50 µm, de préférence d'environ 20 µm à environ 30 µm, et de façon tout à fait préférée d'environ 25 µm.

11. Récipient selon l'une des revendications 1 à 10, **caractérisé en ce que** la région libre (36) de l'élément flexible (32) présente une longueur qui correspond sensiblement à deux à six fois, en particulier trois fois la longueur de la fente, du coin, du gousset ou de l'espace intermédiaire (28) entre ladite au moins une tôle de guidage (16) et la face intérieure (18) de l'enveloppe (12), et la région libre (36) de l'élément flexible (32) présente en particulier une longueur d'environ 0,1 mm à environ 200 mm, en particulier d'environ 0,1 mm à environ 50 mm, de préférence d'environ 5 mm à environ 20 mm, et de façon tout à fait préférée d'environ 10 mm.

12. Récipient selon l'une des revendications 1 à 11, **caractérisé en ce que** le récipient (10) est pourvu de moyens (26) agencés dans la zone (24) de l'ouverture de sortie (22) et situés en amont de l'ouverture de sortie (22), pour collecter et pour distribuer de façon dosée les liquides et les produits visqueux, en particulier le carburant ou le combustible ou l'eau potable, ou d'un dispositif de gestion similaire pour agent propulseur.

13. Récipient selon l'une des revendications 1 à 12, **caractérisé en ce que** le récipient (10) est réalisé avec une structure légère, le récipient (10), et en particulier l'enveloppe (12) du récipient (10), et/ou ladite au moins une tôle de guidage (16) et/ou l'élément flexible (32) et/ou l'élément de rigidification ou de renforcement, est/sont en particulier réalisé(s) en acier, en acier spécial, en aluminium, en titane, en un alliage de ces derniers et/ou en une combinaison de ceux-ci.

14. Récipient selon l'une des revendications 1 à 13, **caractérisé en ce que** le récipient (10), en particulier l'enveloppe (12) du récipient (10) est pourvu d'un revêtement (42) en matière plastique, en particulier en matière plastique renforcée par des fibres, et/ou d'un matériau composite à fibres, ou est réalisé en matière plastique, de façon tout à fait préférée en matière plastique renforcée par des fibres, et/ou en un matériau composite à fibres.

15. Utilisation d'un récipient selon l'une des revendications 1 à 14 pour recevoir, stocker et distribuer des liquides et des produits visqueux, en particulier du carburant ou du combustible ou encore de l'eau potable, dans des véhicules, en particulier des aéronefs ou des engins de l'aviation et de l'aérospatiale, en particulier dans des avions et dans des cabines aérospatiales, en particulier dans des véhicules marins, de préférence dans un sous-marin ou un véhicule sur coussin d'air (Hovercraft), ou en particulier dans des véhicules terrestres, de préférence dans une automobile personnelle, dans des camions ou des camping-cars, en particulier et pour recevoir, stocker et distribuer des liquides et des produits visqueux, en particulier du carburant ou du combustible, pour des réservoirs de combustible destinés à des fusées, ou des réservoirs pour satellites.
